# EUROPEAN PATENT APPLICATION

(11) **EP 1 752 629 A1**
(43) Date of publication of application: **14.02.2007**
(21) Application number: 05703579.2
(22) Date of filing: 14.01.2005
(51) Int. Cl.: F01N 3/02, B01D 46/00, B01D 46/42, B01D 53/94, F01N 3/28

(54) **PARTICULATE FILTER**

(30) Priority: 02.06.2004 JP 2004164147
(71) Applicant: Hino Motors, Ltd., Hino-shi, Tokyo 191-8660 (JP)
(72) Inventor: SUGIHARA, Hiroyuki, c/o Hino Motors, Ltd., Hino-shi, Tokyo 1918660 (JP); TSUJITA, Makoto, c/o Hino Motors, Ltd., Hino-shi, Tokyo 1918660 (JP)
(74) Representative: Köhler, Walter
(86) International application number: PCT/JP2005/000340
(87) International publication number: WO 2005/119021

(57) **Abstract**

A particulate filter is realized in a compact size which is adaptive to forced regeneration through addition of fuel and which can prevent white fume from being generated by excessive part of the fuel.

A particulate filter 12 is disclosed which captures particulates entrained in exhaust gas 2. Plug bodies 8 at inlets of a filter body 7 are arranged in passages and inwardly of an inlet edge of the filter body by predetermined distance, added-fuel oxidation catalyst 13 with enhanced performance of promoting oxidation reaction of the added fuel being carried in a region between the inlet edge of the filter body and arranged positions of the plug bodies 8 at the inlets. Plug bodies 9 at outlets of the filter body 7 are arranged in the passages and inwardly of an outlet edge of the filter body by predetermined distance, excess-fuel oxidation catalyst 14 with enhanced performance for promoting oxidation reaction of excess fuel remaining unreacted being carried in a region between arranged positions of the plug bodies 9 at the outlets and the outlet edge of the filter body.

## Description

### Technical Field

The present invention relates to a particulate filter.

### Background Art

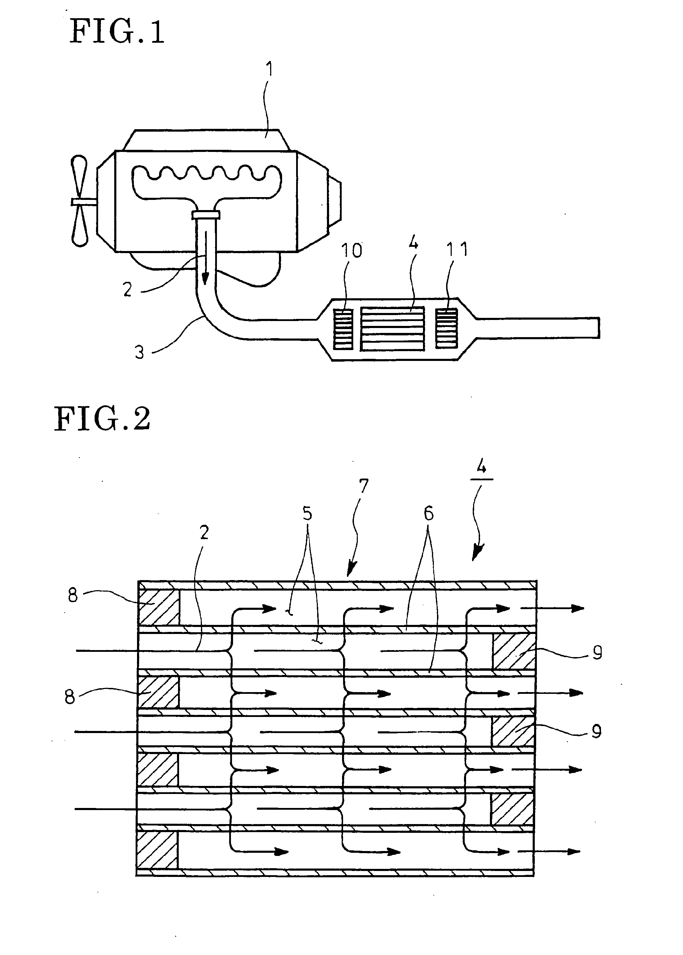

Particulates or particulate matter from a diesel engine is mainly constituted by carbonic soot and a soluble organic fraction (SOF) of high-boiling hydrocarbon and contains a trace of sulfate (misty sulfuric acid fraction). In order to suppress such kind of particulates from being discharged to atmosphere, it has been carried out as shown in Fig. 1 that a particulate filter 4 is incorporated in an exhaust pipe 3 through which exhaust gas 2 from a diesel engine 1 flows.

As shown in detail in Fig. 2, the particulate filter 4 comprises a filter body 7 with a porous honeycomb structure and made of ceramics such as cordierite. The filter body 7 has lattice-like compartmentalized passages 5; alternate ones of the passages 5 have inlets plugged with plug bodies 8 and the remaining passages 5 with unplugged open inlets are plugged at their outlets with plug bodies 9. Thus, only the exhaust gas 2 passing through thin porous walls 6 compartmentalizing the passages 5 is discharged downstream and the particulates are captured on inner surfaces of the walls 6.

Thus, the particulates entrained in the exhaust gas 2, which are captured by the inner surfaces of the walls 6 and accumulated, require to be burned off so as to regenerate the particulate filter 4 before exhaust resistance increases considerably due to clogging. However, the exhaust gas from the diesel engine 1 in a normal operating status rarely has a chance to reach a temperature level at which the particulates spontaneously ignite. Thus, to employ a catalytic regenerative particulate filter 4 has been investigated which has a filter body 7 integrally carrying oxidation catalyst.

Such employment of the catalytic regenerative particulate filter 4 will accelerate the oxidation reaction of the captured particulates to lower the ignition temperature thereof, whereby the particulates can be burned off at an exhaust temperature lower than ever before.

However, even if the catalytic regenerative particulate filter 4 is employed, an accumulated particulate amount may exceed a treated particulate amount in an operation region with lower exhaust temperature. When such operation status with lower exhaust temperature continues, there may be a fear that regeneration of the particulate filter 4 does not proceed well, disadvantageously resulting in excessive capturing of particulates by the filter 4.

To overcome this, as shown in Fig. 1, it has been considered that separate, straight-flow type oxidation catalyst 10 is arranged upstream of the particulate filter 4 and that, when an accumulated particulate amount is getting increased, fuel is added to the exhaust gas 2 upstream of the oxidation catalyst 10 so as to effect forced regeneration of the particulate filter 4.

More specifically, the fuel added upstream of the particulate filter 4 brings about oxidation reaction on the upstream oxidation catalyst 10, so that its reaction heat elevates the temperature of the exhaust gas 2 flowing into the filter 4 just behind to elevate the temperature of a catalytic floor of the filter 4, whereby the particulates are burned off so as to regenerate the particulate filter 4.

Prior art reference to the claimed invention is, for example, a following Reference 1.
[Reference 1] JP3-68210B

### Summary of the Invention

### Problems to be Solved by the Invention

However, in the diesel engine 1 mounted on a vehicle, the added fuel amount may become excessive because of failure to follow any abrupt change in running status of the vehicle. This may cause a part of the added fuel to pass through the particulate filter 4 while remaining unreacted, or may cause the fuel accumulated in the filter 4 during the operation status with lower exhaust temperature to break away all at once when the operation status is shifted to that with higher exhaust temperature, disadvantageously resulting in generation of white fume behind the vehicle.

In order to prevent this kind of white fume from being generated, it has been investigated that another, separate, straight-flow type oxidation catalyst 11 is arranged downstream of the particulate filter 4 so as to oxidize any excessive part of fuel having flown out downstream of the filter 4 while remaining unreacted. However, such three-piece arrangement of the upstream oxidation catalyst 10, particulate filter 4 and downstream oxidation catalyst 11 may require considerably large arrangement space, disadvantageously resulting in serious deterioration of mountability to vehicle.

The invention was made in view of the above and has its object to provide a particulate filter compact in size which is adaptive to forced regeneration through addition of fuel and can prevent generation of white fume due to excess fuel.

### Means or Measures for Solving the Problems

The invention is directed to a particulate filter comprising a filter body made of porous material and having a great number of honeycomb passages through which exhaust gas passes, inlets and outlets of the passages being alternately clogged with plug bodies, respectively, the exhaust gas being caused to pass through thin porous walls compartmentalizing said passages so as to capture particulates entrained in the exhaust gas, characterized in that the plug bodies at the inlets are arranged in the passages and inwardly of an inlet edge on the filter body by predetermined distance, added-fuel oxidation catalyst with enhanced performance for promoting oxidation reaction of added fuel being carried in a region between said inlet edge of the filter body and arranged positions of the plug bodies at the inlets, and that the plug bodies at the outlets are arranged in the passages and inwardly of an outlet edge on the filter body by predetermined distance, excess-fuel oxidation catalyst with enhanced performance for promoting oxidation reaction of excess fuel remaining unreacted being carried in a region between arranged positions of the plug bodies at the outlets and the outlet edge of the filter body.

Thus, whenever the exhaust gas flowing through the respective passages encounters each plug body, it pass through the thin porous wall nearby into the adjacent passage, so that the particulates entrained in the exhaust gas are captured on surfaces of the walls. As a result, filtering performance as is conventionally done is exhibited in a region substantially between outer surfaces of the plug bodies at the inlets and those at the outlets.

Then, when the accumulated particulate amount is getting increased, fuel is added to the upstream exhaust gas. The region between the inlet edge of the filter body and arranged positions of the plug bodies at the inlets serves as straight-flow type oxidation catalyst and the added fuel is oxidized on the added-fuel oxidation catalyst carried in the region, so that its reaction heat elevates the floor temperature just behind to burn off the particulates for forced regeneration of the filter.

Even if part of the added fuel remaining unreacted attempts to reach behind arranged positions of the plug bodies at the outlets, the region between arranged positions of the plug bodies at the outlets and the outlet edge of the filter body serves as straight-flow type oxidation catalyst and the added fuel is oxidized on the excess-fuel oxidation catalyst carried in said region, whereby white fume is prevented from being generated behind the vehicle.

In the invention, carbon oxidation catalyst with enhanced performance for promoting carbon oxidation reaction of the captured particulates may be carried in a region between arranged positions of the plug bodies at the inlets and those at the outlets.

This accelerates the oxidation reaction of the captured particulates by the carbon oxidation catalyst to lower the ignition temperature, whereby the burn-off of the particulates is promoted even at exhaust temperature lower than ever before.

### Effects of the Invention

According to a particulate filter of the invention as mentioned above, various excellent effects and advantages may be obtained as follows:

(I) Realized is a particulate filter with a single filter body as carrier, having all at once filtering performance for capturing particulates entrained in exhaust gas, burn-off performance for forcedly burning off the captured particulates with reaction heat from oxidation reaction of added fuel, and performance for oxidizing excess fuel remaining unreacted. As a result, a particulate filter compact in size is realized which is adaptive to forced regeneration through addition of fuel and can prevent white fume from being generated by the excess fuel, thereby substantially improving mountability to a vehicle.

(II) When carbon oxidation catalyst with enhanced performance for promoting carbon oxidation reaction of the captured particulates is carried in a region between arranged positions of the plug bodies at the inlets and those at the outlets, the oxidation reaction of the captured particulates is promoted to lower the ignition temperature, whereby burn-off of the particulates is promoted even at exhaust temperature lower than ever before. As a result, the treated particulate amount during the normal operation due to spontaneous ignition of the particulates can be increased to reduce the frequency of the forced regeneration, and moreover during such forced regeneration the burn-off of the particulates can be more effectively carried out.

### Brief Description of the Drawings

[Fig. 1] A schematic view showing a conventional particulate filter.
[Fig. 2] A sectional view showing particulars of the particulate filter shown in Fig. 1.
[Fig. 3] A sectional view showing an embodiment of the invention.
[Fig. 4] A view showing the filter body dipped in carbon oxidation catalyst.
[Fig. 5] A view showing the filter body dipped in added-fuel oxidation catalyst.
[Fig. 6] A view showing the filter body dipped in the excess-fuel oxidation catalyst.

### Explanation of the Reference Numerals

- 2: exhaust gas
- 3: exhaust pipe
- 5: passage
- 6: thin porous wall
- 7: filter body
- 8: plug body at inlet
- 9: plug body at outlet
- 12: particulate filter
- 13: added-fuel oxidation catalyst
- 14: excess-fuel oxidation catalyst
- 15: carbon oxidation catalyst

### Best Mode for Carrying Out the Invention

An embodiment of the invention will be described in conjunction with the drawings.

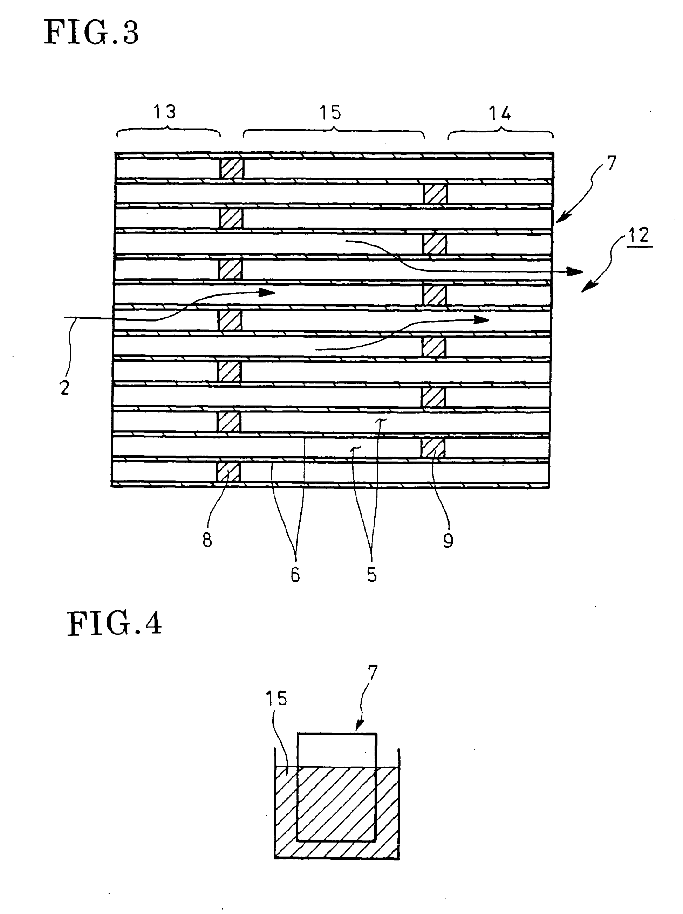

Figs. 3-6 shows the embodiment of the invention. In a particulate filter 12 of the invention, as shown in Fig. 3, a filter body 7 made of porous material has a great number of honeycomb passages 5 through which exhaust gas 2 flows, Plug bodies 8 at inlets are arranged in the passages 5 inwardly of an inlet edge of the filter body 7 by predetermined distance, added-fuel oxidation catalyst 13 with enhanced performance for promoting oxidation reaction of added fuel being carried in a region between the inlet edge of the filter body and arranged positions of the plug bodies 8 at the inlets. Plug bodies 9 at outlets are arranged in the passages 5 inwardly of an outlet edge of the filter body 7 by predetermined distance, excess-fuel oxidation catalyst 14 with enhanced performance for promoting oxidation reaction of excess fuel remaining unreacted being carried in a region between arranged positions of the plug bodies 9 at the outlets and the outlet edge of the filter body.

Furthermore, in the embodiment, carbon oxidation catalyst 15 with enhanced performance for promoting carbon oxidation reaction of the captured particulates is carried in a region between arranged positions of the plug bodies 8 at the inlets and arranged positions of the plug bodies 9 at the outlets.

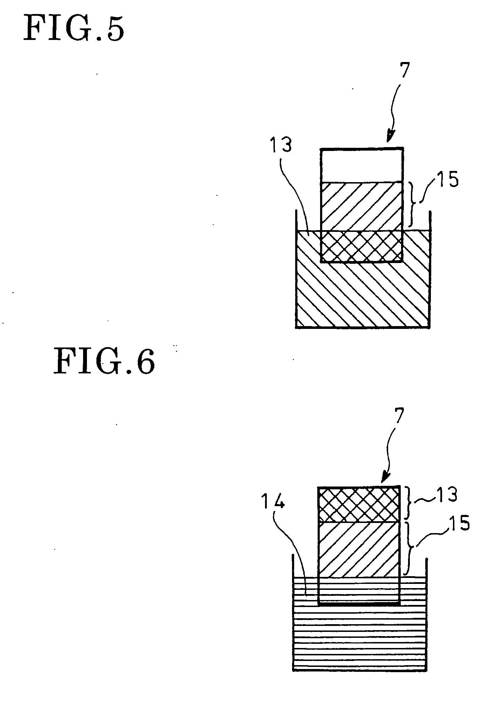

Here, exemplified is a specific way for carrying the added-fuel, excess-fuel and carbon oxidation catalysts 13, 14 and 15 in the filter body 7. First, as shown in Fig. 4, dipped to the carbon oxidation catalyst 15 as first liquid is a portion of the filter body 7 between its inlet edge and arranged positions of the plug bodies 9 at the outlets so as to carry the catalyst 15 all over the dipped portion. Then, as shown in Fig. 5, dipped to the added-fuel oxidation catalyst 13 as second liquid is a portion of the filter body 7 between its inlet edge and arranged positions of the plug bodies 8 at the inlets so as to carry the catalyst as overlay on the carbon oxidation catalyst 15 all over the dipped area. Then, with the filter body 7 being reversed with its upside down as shown in Fig. 6 so as to direct downward the outlets of the filter body 7 carrying no catalyst at all, dipped to the excess-fuel oxidation catalyst 14 as third liquid is a portion of the filter body 7 between its outlet edge and arranged positions of the plug bodies 9 at the outlets so as to carry the excess-fuel oxidation catalyst 14 all over the dipped portion.

Thus, whenever the exhaust gas 2 flowing through the respective passages 5 encounters each plug body 8 or 9, it pass through the thin porous wall 6 nearby into the adjacent passage 5, so that the particulates entrained in the exhaust gas 2 are captured on surfaces of the walls 6. As a result, filtering performance as is conventionally done is exhibited in a region substantially between outer surfaces of the plug bodies 8 at the inlets and outer surfaces of the plug bodies 9 at the outlets.

Then, when the accumulated particulate amount is getting increased, fuel is added to the upstream exhaust gas 2. The region between the inlet edge of the filter body 7 and arranged positions of the plug bodies 8 at the inlets serves as straight-flow type oxidation catalyst and the added fuel is oxidized on the added-fuel oxidation catalyst 13 carried in the region, so that its reaction heat elevates the floor temperature just behind to burn off the particulates for forced regeneration of the filter.

Even if part of the added fuel remaining unreacted attempts to reach behind arranged positions of the plug bodies 9 at the outlet, the region between the arranged positions of the plug bodies 9 at the outlets and the outlet edge of the filter body 7 serves as straight-flow type oxidation catalyst and the added fuel is oxidized on the excess-fuel oxidation catalyst 14 carried in the region, whereby white fume is prevented from being generated behind the vehicle.

Thus, according to the above-mentioned embodiment, realized is a particulate filter 12 with a single filter body 7 as carrier, having all at once filtering performance for capturing particulates entrained in exhaust gas 2, burn-off performance for forcedly burning off the captured particulates with reaction heat from oxidation reaction of added fuel, and performance for oxidizing excess fuel remaining unreacted. As a result, the particulate filter 12 compact in size is realized which is adaptive to forced regeneration through addition of fuel and can prevent white fume from being generated by the excess fuel, thereby substantially improving mountability to a vehicle.

Moreover, the oxidation reaction of the captured particulates may be promoted to lower the ignition temperature, whereby burn-off of the particulates is promoted even at exhaust temperature lower than ever before. As a result, the treated particulate amount during the normal operation due to spontaneous ignition of the particulates can be increased to reduce the frequency of the forced regeneration, and moreover during such forced regeneration the burn-off of the particulate can be more effectively carried out.

It is to be understood that a particulate filter according to the invention is not limited to the above-mentioned embodiment and that various changes and modifications may be made without leaving the gist of the invention. For example, the carbon oxidation catalyst may be carried, as needs demand, in the region between arranged positions of the plug bodies at the inlets and those at the outlets.

## Claims

1. A particulate filter (12) comprising a filter body (7) made of porous material and having a great number of honeycomb passages (5) through which exhaust gas (2) passes, inlets and outlets of the passages (5) being alternately clogged with plug bodies (8,9), respectively, the exhaust gas (2) being caused to pass through thin porous walls (6) compartmentalizing said passages (5) so as to capture particulates entrained in the exhaust gas(2), **characterized in that** the plug bodies (8) at the inlets are arranged in the passages (5) and inwardly of an inlet edge on the filter body (7) by predetermined distance, added-fuel oxidation catalyst (13) with enhanced performance for promoting oxidation reaction of added fuel being carried in a region between said inlet edge of the filter body (7) and arranged positions of the plug bodies (8) at the inlets, and that the plug bodies (9) at the outlets are arranged in the passages (5) and inwardly of an outlet edge on the filter body (7) by predetermined distance, excess-fuel oxidation catalyst (14) with enhanced performance for promoting oxidation reaction of excess fuel remaining unreacted being carried in a region between arranged positions of the plug bodies (9) at the outlets and the outlet edge of the filter body (7).

2. A particular filter as set forth in claim 1, wherein carbon oxidation catalyst (15) with enhanced performance for promoting carbon oxidation reaction of the captured particulates is carried in a region between arranged positions of the plug bodies (8,9) at the inlets and those at the outlets.
